Europäisches Patentamt

European Patent Office

Office européen des brevets

(11) Publication number: **0 193 258**
**A2**

## (12) EUROPEAN PATENT APPLICATION

(21) Application number: 86300287.9

(22) Date of filing: 17.01.86

(51) Int. Cl.⁴: **B 65 H 5/06**
**B 65 H 9/16**

(30) Priority: 23.02.85 GB 8504738

(43) Date of publication of application:
03.09.86 Bulletin 86/36

(84) Designated Contracting States:
BE DE FR IT NL SE

(71) Applicant: BURROUGHS CORPORATION (a Delaware corporation)
Burroughs Place
Detroit Michigan 48232(US)

(72) Inventor: Steele, David
24 Beresford Gardens
Edinburgh EH5 3ES Scotland(GB)

(74) Representative: Kirby, Harold Douglas Benson et al,
G.F. Redfern & Company Marlborough Lodge 14
Farncombe Road
Worthing West Sussex BN11 2BT(GB)

(54) Bidirectional document track.

(57) An improved document track for document processing equipment allows bidirectional movement of a document 10 along the track 12. A castor arm 50 is mounted at its basal end on a castoring bearing 48 in turn at the distal end of a castor arm support member 46 on a second side 40 of the track 12. A self-castoring idler wheel 52 is mounted atop the castor arm 50. Maximum angular excursion 81 in a first direction of the castor arm 50 is prevented by a first stop 60 and in a second direction 82 by a second stop 62. The self-castoring idler wheel 52 is urged against a drive roller 16. As a document proceeds along the track 12 urged by the drive roller 16 so the castor arm 50 moves to one or other of its angular extremes 81, 82 to cause the self-castoring idler wheel 52 to urge the document 10 down onto the track 12 regardlessly of the direction of movement of the document 10 along the track 12.

FIG.5

EP 0 193 258 A2

# BIDIRECTIONAL DOCUMENT TRACK

The present invention relates to a document track. Such a track is used in document processing equipment for moving a document to and from different processes. The present invention particularly relates to a document track wherein a document may be moved in both directions.

Many different types of machine exist for the automatic mechanical or electronic processing of documents. The automatic processing of documents involves the deposition of data thereon, the retrieval of data therefrom, and sorting and stacking. Automatic document processing ranges in its scope from computer cards through all sorts of official and financial documents. The present invention is hereinafter described with reference to its use in a cheque encoding machine used for the automatic processing of bankers cheques. It is to be understood that this represents only one area of use of the present invention and that the present invention may be applied to any equipment wherein a document is moved along a track bidirectionally in the manner hereinafter disclosed.

Cheque encoding equipment accepts an input stack of cheques which are moved along a document track to be processed and thereafter delivered up and sorted amongst a plurality of output stacks. The present invention concerns itself with the document track wherealong the cheques are transported in the course of automatic processing.

Cheque encoding equipment is inherently bulky for its function. The input stack or stacks are provided at one end of a machine, the cheques are transported substantially unidirectionally across the document processing portion of the machine and the output stacks are provided at the other end of the machine. Document processing is achieved by means of an array of processing devices arranged along the document track intended to achieve such operations as automatic character reading, printing, endorsing and the like.

In moving along a track the document is moved by means of belts or rollers urging it along the track. Tilted idler wheels are also used to impart a downward force to the document to keep it firm on the bottom of the track.

In attempting to make the machine smaller, it is advantageous to convolute the track and to shunt the document bidirectionally backwards and forwards along the track much as one would shunt a train in a marshalling yard so that it may be selectably sequentially presented to each document processing operation in turn.

Unfortunately, the prior art system for keeping a document firm in the bed of its track cannot operate bidirectionally. An angled idling roller designed to keep a document in its track when the document is moving in a first direction pulls the document up out of the track when the document is moving the other way. Whilst it is possible at some cost to present different idling wheels to the document on the track dependently upon which direction the document is made to move, this is slow, cumbersome and requires a degree of supervisory control.

It is, therefore, desirable to provide a document track wherealong a document may be moved in either direction without any outside control function and wherein the document is automatically urged against the base of the track irrespectively of the direction in which it is moving.

The present invention consists in a document track for bi-directional transportation of a document therealong with a lower edge of the document in contact with a reference surface, said track comprising: a drive roller for engaging a first surface of the document to urge the document parallel to said reference surface; and an idler wheel assembly for engaging a second surface of the document in opposition to said drive wheel to urge the document against said drive wheel and to urge the document towards said reference surface; said idler wheel assembly comprising an idler wheel, a castor arm for supporting said idler wheel; and a castoring bearing for locating a pivot point of said castor arm relative to said reference surface and for allowing rotation of said caster arm relative to said reference surface in a plane parallel to the document; said drive roller having a higher coefficient of friction against the document than said idler wheel for said idler wheel assembly to adopt a first angular position relative to said reference surface when the document moves in a first direction along said track and to adopt a second angular position relative to said reference surface when the document moves in a second direction along said track, said first and second angular positions being operative to cause said idler wheel to urge the document towards said reference surface when said document is moving respectively in said first and said second directions.

In a preferred embodiment of the present invention, there is provided a document track having first and second side walls separated by a document passage wherealong the document is moved. The document passage comprises a short horizontal joining section between the first side wall and the second side wall in the base thereof providing a bottom to the document passage and a reference surface whereagainst the document is to be urged.

A drive roller rotated for example by a motor presses against a first face of the document. A self-castoring idler wheel presses against the second opposite face of the document in opposition to the drive roller. The document is thereby gripped between the drive roller and the self-castoring idler wheel. The self-castoring idler wheel is supported on a plain bearing at the distal end of a castor arm. The basal end of the castor arm is provided with a ball bearing castoring bearing in a support member allowing the castor arm to rotate in the plane of the document. A first castor arm stop is provided on a first side of the support member operative to prevent the castor arm from moving beyond a first angle to the vertical in a first direction and a second castor arm stop is provided to the other side of the support member to prevent the castor arm from going beyond a second angle to the vertical when the castor arm is urged towards the second castor arm stop.

As the document proceeds through in a first direction, so it engages the self-castoring idler wheel and moves it in the direction of the document's motion until it engages the first castor arm stop. At this position, the self-castoring idler wheel is operative to urge the document down against the joining section between the first and second side walls of the document track and thereby to keep the document in the document passage. If a document is introduced going the other way, the castor arm is urged by document movement towards the second castor arm stop, in which position the self-castoring idler wheel is once again angled downwards to urge the document into the document passage as before.

The invention is further explained by way of an example by the following description taken in conjunction with the appended drawings in which:

Fig. 1 shows a vertical elevation from a first side of a document track according to the prior art.

Fig. 2 shows the prior art document track of Fig. 1 in vertical elevation viewed from the opposite side from Fig. 1.

Fig. 3 shows the prior art document track of Fig. 1 viewed from above.

Fig. 4 shows the prior art document track of Figs. 1,2 and 3 viewed along the line A-A' of Fig. 3 looking in the direction of the arrows.

Fig. 5 shows a vertical elevation of a document proceeding in a first direction along a track according to the present invention.

Fig. 6 shows a vertical elevation of a document proceeding in the opposite direction along the document track of Fig. 5, and

Fig. 7 shows details of the construction of the self-castoring idler wheel assembly and of the drive roller according to the present invention.

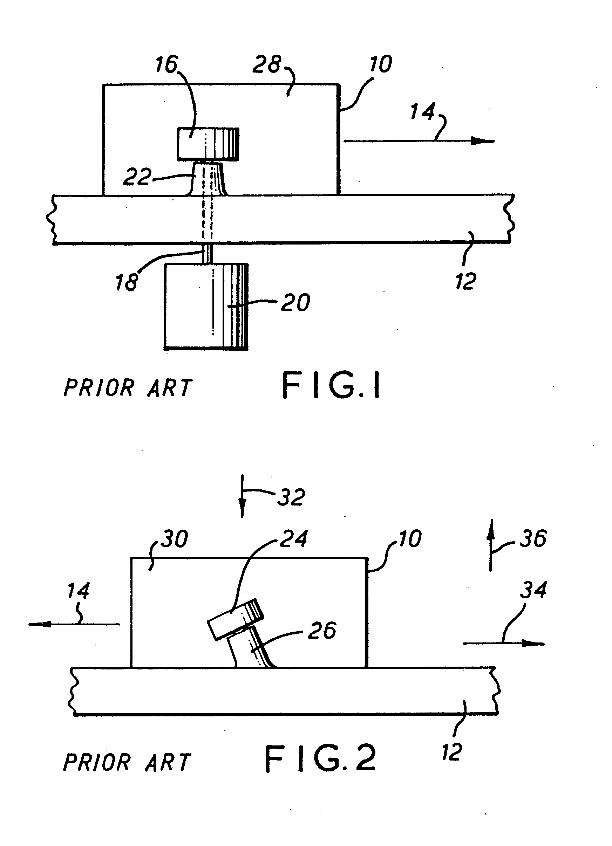

Fig. 1 shows a document track according to the prior art.

A document 10 moves along the track 12 in the direction of the first arrow 14. A drive roller 16 is turned by a shaft 18 passing through the document track 12 and activated by a motor 20. The motor 20 might equally be replaced by a belt driven pulley. The drive roller 16 is mounted upon a drive roller boss 22 on a first side of the document track 12. As the drive roller 16 rotates, so it urges the document in the direction of the first arrow 14.

Fig. 2 shows the prior art document track of Fig. 1 in vertical elevation seen from the other side from that shown in Fig. 1. An idler wheel 24 is mounted for free rotation on an idler wheel boss 26 on a second side of the track 12.

Whilst the drive roller 16 is urged against a first surface 28 of the document, the idler wheel 24 is urged against the opposite second surface 30 of the document in opposition to the drive wheel 16. The idler wheel 24 is urged towards the drive roller 16 to trap the document 10 therebetween for the frictional drive of the drive roller 16 to be imparted to the document 10. Further, the idler wheel 24 is angled with respect to the direction of motion of the document 10 indicated by the first arrow 14. As the idler wheel 24 rotates, so it imparts a downward force to the document 10 as indicated by the second arrow 32 urging the document 10 down into the track 12. If, however, the document were to be urged in the opposite direction as indicated by the third arrow 34 the angle of the idler wheel 24 would be such as to cause the document 10 to be pushed up and out of the track 12 as indicated by a fourth

arrow 36.

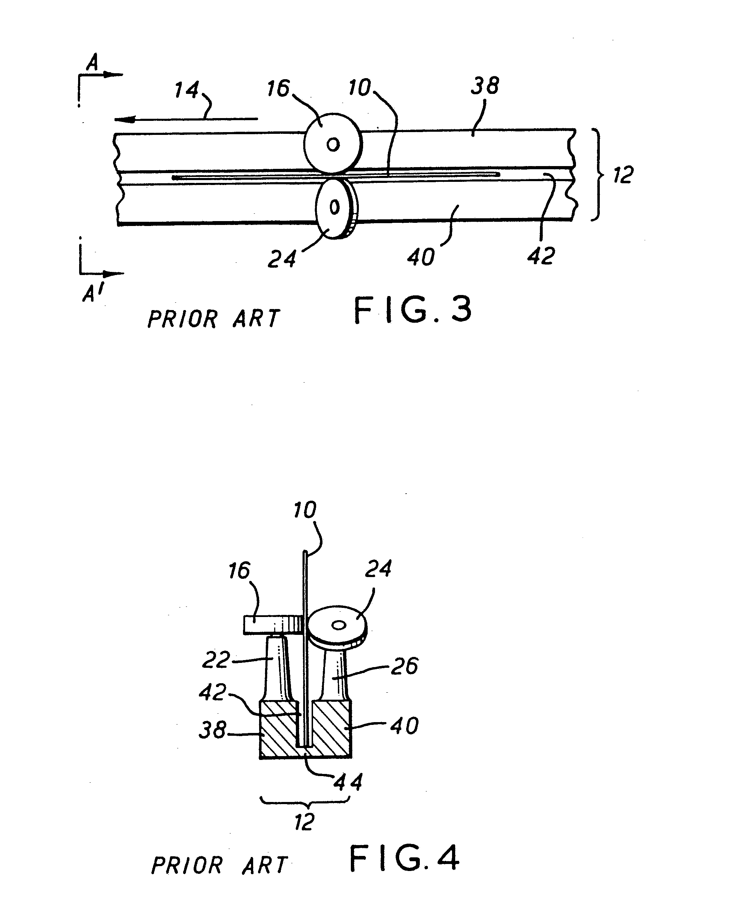

Fig. 3 shows the prior art document track according to Figs. 1 and 2 seen from above. Fig. 3 clearly shows that the document track 12 comprises a first side wall 38 and a second side wall 40 separated by a document passage 42 in the form of a narrow defile between the first 38 and second 40 side walls of the track 12.

Fig. 4 lastly shows the prior art document track according to Figs. 1 to 3 viewed along the line A-A' of Fig. 3 looking in the direction of the arrows associated therewith. The first 38 and second 40 side walls of the track 12 are connected by a short horizontal joining section 44 which forms a reference surface, against which the document 10 is pressed by the downward urging of the idler wheel 24.

The document track shown in Figs. 1 to 4 being a prior art track, for reasons already given, may function only in one direction. A document progressing as indicated by the arrow 14 is kept in the track as required, but a document being driven as indicated by the arrow 34 is quickly thrown out of the track. The track, therefore, cannot be used in both directions.

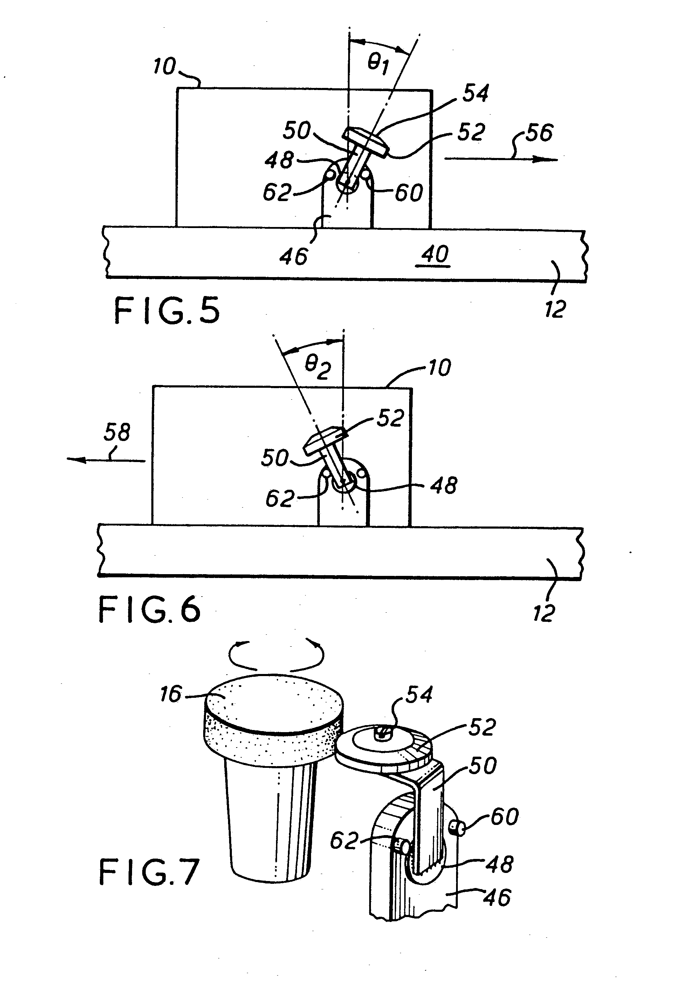

Fig. 5 shows the preferred embodiment of the present invention viewed from the same side as that shown in Fig. 2. The track 12 is the same as in the prior art and the drive roller 16 is also the same. Instead of an idler wheel mounting boss, there is provided on the second side wall 40 of the track 12 a castor arm support member 46 at the distal end whereof is provided a castoring bearing 48. The castoring bearing 48 allows rotation in a plane parallel to the document 10 of a castor arm 50 at the distal end whereof is mounted a self-castoring idler wheel 52. The self-castoring idler wheel 52 is in turn free to rotate about an idler wheel bearing 54 shown in Fig. 7.

In contrast to the prior art, the drive roller 16 is free to rotate in either direction to cause the document 10 to move either in a first direction as indicated by a fifth arrow 56 or in the opposite direction as indicated by a sixth arrow 58 shown in Fig. 6.

The castor arm support member 46 is provided with a first stop 60 and a second stop 62. The first stop 60 engages the castor arm 50 to allow the castor arm 50 to move to a first angle θ1 to the vertical and not therebeyond. The second stop 62 can engage the castor arm 50 on the other side of the castor arm support member 46 from the first stop 60 to allow the castor arm 50 to assume a second angle θ2 to the vertical and on the other side of the vertical on the first angle θ1.

When the drive roller 16 rotates to urge the document to move in the direction of the fifth arrow 56 as indicated in Fig. 5, the document 10 engages the self-castoring idler wheel 52 which in turn is moved by frictional forces to assume the position shown in Fig. 5 where the castor arm 50 engages the first stop 60. The position of the castor arm 50 means that the self-castoring idler wheel 52 is at an angle to the horizontal whereat it urges the document 10 down into the track 12.

When the document is urged by the drive roller 16 to move in the direction of the sixth arrow 58 as shown in Fig. 6, once again the document 10 engages the self-castoring idler wheel 52 and frictional forces cause the castor arm 50 to swing the other way to engage the second stop 62. Once again, the angle of the self-castoring idler wheel 52 is such as to cause the document 10 to be driven down into the track 12. Thus, no matter which direction the document 10 is caused to move along the track 12, the self-castoring idler wheel assembly 52,50,62,48,54 allows automatic positioning of a self-castoring idler wheel 52 to drive the document down into the track 12 without any outside intervention being required. The coefficient of friction of the self-castoring idler wheel 52 against the document 10 is chosen to be less than the coefficient of friction of the drive roller 16 against the other surface of the document 10 so that the frictional effect of the drive roller 16 predominates and the document slides relative to the self-castoring idler wheel 52 and is thereby driven as indicated by the fifth and sixth arrows 56,58 and is not crumpled down into the track 12.

Fig. 7 shows a projected view of the drive roller 16 and the self-castoring idler wheel assembly without a document therebetween.

The castoring bearing 48 is chosen to be a bearing of very low frictional torque. From this point of view, it is preferred that the castoring bearing 48 should be a ball bearing. The idler wheel bearing 54 is a bearing of higher frictional torque than the castoring bearing 48. From this point of view, it is preferred that the idler wheel bearing 54 be a plain sleeve bearing of a kind well known in the art. As the document 10 causes the self-castoring idler wheel 52 to rotate, so the frictional torque of the idler wheel bearing 54 causes a mean displacing force to be experienced by the castor arm 50. This mean displacing force (equal to the frictional torque of the idler wheel bearing 54 divided by the radius of the self-castoring idler wheel 52) applies a torque (equal to the torque of the idler wheel bearing 54 divided by the radius of the idler wheel 52 and multiplied by the length of the castor arm 50) to the castoring bearing 48. All that is required is that the above-indicated torque is sufficient to cause rotation of the castoring bearing 48.

The self-castoring idler wheel 52 is elastically opposed to the drive roller 16. Whilst no specific means are shown in the drawings as to the manner this elastic opposition is achieved, it is to be understood that such elastic opposition can come about by the use of resilient materials for the drive roller 16 and/or the self-castoring idler wheel 52. As an alternative, the castor arm 50 may be made of elastically-resilient materials such as steel or phosphor-bronze and may serve to urge the self-castoring idler wheel 52 against the drive roller 16. As another alternative, the castor arm support member 46 may be held upon the second wall 40 of the track 12 on a sliding carriage urging it towards the drive roller 16 under elastic force. Yet further, the idler wheel bearing 54 may be mounted in a slot on the upper part (which is horizontal) of the castor arm 50 and urged along that slot towards the drive roller 16 by means of a compression spring.

In the present embodiment, the drive roller 16 is made of a rubber material with a high coefficient of friction and the self-castoring idler wheel 52 is fabricated from a self-lubricating semi-rigid polymer such as Nytron GS (trade mark). Those skilled in the art will appreciate that other materials are suitable for this purpose within the constraints hereinbefore mentioned.

Those skilled in the art will also be aware that this same document track may equally be used in any situation where it is desired to move a document-shaped item along a track.

As the castor arm 50 moves either to its first angle to the vertical 81 or its second angle to the vertical 82, so the point of gripping of the document 10 between the drive roller 16 and the self-castoring idler wheel 52 moves towards the drive roller 16. That is to say, if the document 10 were not present, the self-castoring idler wheel 52 would contact the drive roller 16 at a point further over towards the side of the track 12 whereon the drive roller 16 is situated than it would contact the drive roller 16 if it were completely upright. The elastic force urging the self-castoring idler wheel 52 in opposition to the drive roller 16 is such as to maintain the force of the self-castoring idler wheel 52 at a desired level when the self-castoring idler wheel 52 is in its extremes of positions 81, 82 and moved towards the side of the track whereon the drive roller 16 is situated.

It is preferred that the spring force urging the self-castoring idler wheel 52 in opposition to the driver roller 16 be selectable and to this end it is preferred that the spring force be adjustable by means of selectably positionable mechanical members, prestressing members and the like.

Whilst in the preferred embodiment hereinbefore shown, the top distal portion of the castor arm has been shown bent over to a near horizontal position, it is to be appreciated that a bent over portion such as is shown is not a necessary feature of the castor arm, and is merely the preferred most convenient manner of implementation.

Whilst in the preferred embodiment of the present invention first 60 and second 62 stops have been shown to provide a limit to the angular excursion of the castor arm 50, it is to be appreciated that other methods of halting the angular progress of the castor arm 50 may be employed. As one example, the castor arm support member 46 may be provided with a V-shaped groove or indentation with the castoring bearing 48 provided at the base thereof. The arms of the V-shape can then engage the castor arm support member to define its angular excursion. The support member 46 may be omitted altogether and absorbed into the second side wall 40 of the track 12, which will then provide the stops and other features of the support member 46.

The first angle to the vertical 81 and the second angle to the vertical 82 need not be made the same. It may be desired to impart a different downward driving force to a document when it is moving in one direction to when it is moving in the other. Accordingly, the first and second angles 81, 82 to the vertical may be independently selected.

The stops 60, 62 whilst shown herein in a fixed position upon the castor arm support member 46 may be made adjustable in position (as may the arms of any V-shaped member serving the same function) in order that the degree of downward frictional drive to a document may be selected according to the type of document that is being moved along the track. Thus, the same track may be employed for many different kinds of documents with many different coefficients of surface friction.

0193258

CLAIMS:

1.      A document track for bi-directional transportation of a document therealong with a lower edge of the document in contact with a reference surface, said track comprising: a drive roller for engaging a first surface of the document to urge the document parallel to said reference surface; and an idler wheel assembly for engaging a second surface of the document in opposition to said drive wheel to urge the document against said drive wheel and to urge the document towards said reference surface: said idler wheel assembly comprising an idler wheel; a castor arm for supporting said idler wheel; and a castoring bearing for locating a pivot point of said castor arm  relative to said reference surface and for allowing rotation of said  castor arm  relative to said reference surface in a plane parallel to the document; said drive  roller having a higher co-efficient of friction against the document than said idler wheel for said idler wheel assembly to adopt a first angular position relative to said reference surface when the document moves in a first direction along said track and to adopt a second angular position relative to said reference surface when the document moves in a second direction along said track, said first and second angular positions being operative to cause said idler wheel to urge the document towards said reference surface when said document is moving respectively in said first and said second directions.

2.      An apparatus according to Claim 1 comprising a first stop for engaging said castor arm and for preventing angular excursion thereof beyond said first angular position and a second stop for engaging said castor arm and for preventing angular excursion thereof beyond said second angular position.

3.    An apparatus according to Claim 2 comprising a support member for said castoring bearing, said first and second stops being provided on said support member.

4.    A document track according to any of the preceding claims, wherein said idler wheel is elastically urged in opposition to said drive roller.

5.    A document track according to any of the preceding claims, wherein said first angular position is not symmetrical about a vertical line with said second angular position for said document to be urged against said reference surface with a different force when moving in said first direction compared with when said document is moving in said second direction.

6.    A document track according to any of the preceding claims, wherein said idler wheel assembly comprises an idler wheel bearing, said idler wheel bearing providing sufficient torque in opposition to rotation to rotate said castoring bearing.

7.    A document track according to Claim 6, wherein said idler wheel bearing is a sleeve bearing and wherein said castoring bearing is a ball bearing.

8.    A document track according to any of Claims 2 to 7, wherein the positions of said first and second stops are selectably adjustable.

9.    A document track according to Claim 4 or according to any of Claims 5 to 6 when dependent upon Claim 4, wherein the amount of said elastic force urging said idler wheel in opposition to said drive roller is selectable.

PRIOR ART FIG.1

PRIOR ART FIG.2

PRIOR ART  FIG. 3

PRIOR ART  FIG. 4

FIG.5

FIG.6

FIG.7